Europäisches Patentamt

European Patent Office

Office européen des brevets

(19)

(11) **EP 0 758 095 A2**

(12) **EUROPÄISCHE PATENTANMELDUNG**

(43) Veröffentlichungstag:
**12.02.1997 Patentblatt 1997/07**

(51) Int. Cl.⁶: **G01V 3/20**

(21) Anmeldenummer: 96112735.4

(22) Anmeldetag: **07.08.1996**

(84) Benannte Vertragsstaaten:
**AT CH DE FR LI**

(30) Priorität: **07.08.1995 DE 19529000**

(71) Anmelder: **Gesellschaft für geophysikalische und ingenieurgeologische Dienste mbH 76275 Ettlingen (DE)**

(72) Erfinder:
• **Donié, Christoph, Dr.
76307 Karlsbad (DE)**
• **Lazar, Claudius
76344 Eggenstein (DE)**

(74) Vertreter: **Füchsle, Klaus, Dipl.-Ing. et al
Hoffmann, Eitle & Partner,
Patentanwälte,
Arabellastrasse 4
81925 München (DE)**

(54) **Geoelektrisches Messverfahren und Elektrodenmessstrang hierfür**

(57)  Ein Elektrodenmeßstrang (10) für geoelektrische Messungen weist mindestens sechs Elektroden auf, die an dem Meßstrang unter gleichen gegenseitigen Abständen angeordnet sind. Hierbei führen mehrere elektrische Anschlußleitungen von mindestens einem Ende des Meßstranges zu den Elektroden.

Durch Verwendung eines derartigen Meßstranges (10) in einem horizontalen Bohrloch (12) lassen sich im Rahmen der geoelektrischen Tomographie komplette Gebirgsformationen "durchleuchten", wobei sehr hohe Eindringtiefen erzielt werden können.

Fig. 2

EP 0 758 095 A2

**Beschreibung**

Die vorliegende Erfindung betrifft ein geoelektrisches Meßverfahren und einen Elektrodenmeßstrang für ein derartiges Meßverfahren.

Als geoelektrisches Meßverfahren ist neben der Widerstandskartierung die sogenannte Widerstands-Tiefensondierung bekannt, die zur Bestimmung vertikaler Schichtenfolgen insbesondere bei horizontaler Lagerung von Schichten unterschiedlicher Mächtigkeiten und spezifischer Widerstände dient. Die geoelektrische Widerstands-Tiefensondierung wird in der ingenieurgeologischen Baugrunduntersuchung angewandt, wenn die Existenz, die Tiefenlage und die Mächtigkeit bindiger oder rolliger Schichten nachzuweisen sind.

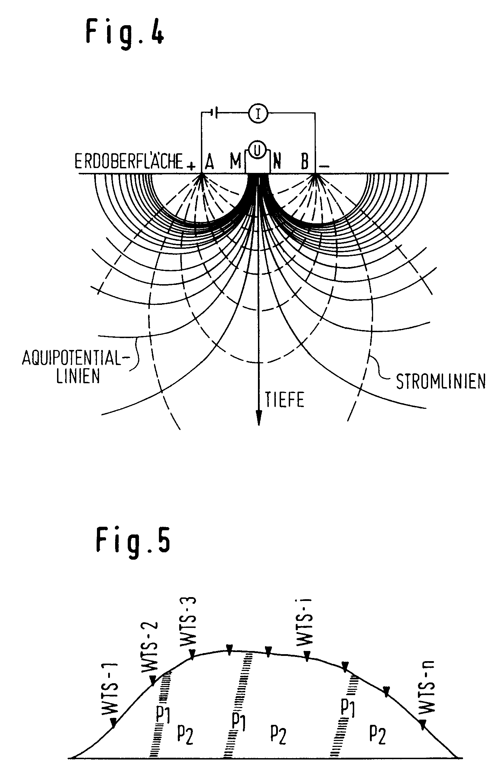

Das Prinzip der Widerstands-Tiefensondierung ist in Fig. 4 dargestellt. Hierbei sind mit A und B zwei Stromelektroden bezeichnet, die in die Erdoberfläche eingesetzt sind und durch die ein Gleichstrom einer Stromquelle fließt. Die Bezugszeichen M und N bezeichnen zwei Potentialelektroden, die mit einem Spannungsmeßgerät verbunden sind. Durch Messung der Spannung an verschiedenen Stellen der Erdoberfläche läßt sich der spezifische elektrische Widerstand der geologischen Formation ermitteln, und hierdurch lassen sich Rückschlüsse auf den geologischen Aufbau der Formation erzielen. Durch manuelle Änderung der Elektrodenkonfigurationen kann der Meßaufbau jeweils der geologischen Aufgabe, der petrophysikalischen Situation und den geometrischen Verhältnissen angepaßt werden. Der Abstand der Meßprofile und der Meßpunkte bestimmt dabei das Auflösungsvermögen der Widerstands-Tiefensondierung.

In Fig. 5 ist schematisch eine hügelartige geologische Formation dargestellt, wobei Bereiche mit geringerem spezifischen elektrischen Widerstand $\rho 1$ schraffiert dargestellt sind. Die Bezugszeichen WTS-1, WTS-2, .... WTS-n bezeichnen die Lage der Widerstands-Tiefensondierungen.

Ein weiteres geoelektrisches Meßverfahren ist die geoelektrische Bohrlochkartierung, die ebenfalls eine Form der Widerstandskartierung ist und zur Ergründung einer lateral angeordneten Verteilung des scheinbaren spezifischen elektrischen Widerstandes eingesetzt wird. Aus dem spezifischen elektrischen Widerstand lassen sich wiederum geologische, hydrogeologische oder geotechnische Parameter ableiten. Zur geoelektrischen Bohrlochkartierung wurden bislang vertikale Bohrlöcher erstellt und eine Sonde mit zwei Stromelektroden und zwei Potentialelektroden, die einen festen gegenseitigen Abstand aufweisen, wurden mit einem Gewicht in das Bohrloch abgesenkt, wobei während des Absenkens die Meßwerte aufgezeichnet wurden. So beschreibt beispielsweise die EP 0 384 823 A1 eine Sonde in Form eines Meßblockes, der mit einer zentralen Elektrode versehen und in eine Testbohrung abgelassen wird. Zur Fokussierung der Testströme sind ein aktives und ein passives Fokussierungssystem vorgesehen.

Ferner ist aus der WO 92/13286 ein Meßsystem zur geoelektrischen Kartierung einer Formation bekannt. Bei diesem bekannten Meßsystem wird ein Seil mit zwei Stromelektroden und zwei Spannungselektroden mit Hilfe einer Zugmaschine über die Formation gezogen, um räumlich verteilte Daten zu erzielen. Der Nachteil dieses Meßstranges ist darin zu sehen, daß dieser über das Gelände gezogen werden muß und daß für unterschiedliche geologische Gegebenheiten jeweils ein unterschiedlicher Meßstrang eingesetzt werden muß.

Die EP 0 091 270 offenbart eine geoelektrische Meßeinrichtung zum Messen des Widerstands in der Umgebung eines vertikalen Bohrloches. Der Elektrodenmeßstrang besitzt mindestens sechs Elektroden, die jeweils einem unterschiedlichen Zweck dienen. Eine zentrale Stromelektrode ist mit einer Stromleitung verbunden und Spannungselektroden sind in Paaren um die Stromelektrode angeordnet. Der Elektrodenmeßstrang wird während einer Analyse verschoben.

Es ist deshalb das der Erfindung zugrundeliegende Problem (Aufgabe), einen Elektrodenmeßstrang für geoelektrische Messungen zu schaffen, mit dem Messungen mit unterschiedlicher Eindringtiefe ohne Verschiebung oder Austausch des Meßstranges erzielt werden können.

Die Lösung dieser Aufgabe erfolgt gemäß Anspruch 1 durch einen Meßstrang, der mindestens sechs Elektroden aufweist, die an dem Meßstrang angeordnet sind. Ferner weist der erfindungsgemäße Meßstrang mehrere elektrische Anschlußleitungen auf, die von mindestens einem Ende des Meßstranges zu den Elektroden führen. Jede Elektrode des Meßstranges ist über eine am Meßstrang angeordnete Schalteinrichtung schaltbar und mit einer Stromleitung und einer Spannungsleitung verbindbar.

Durch einen derartigen Meßstrang lassen sich unterschiedliche Elektroden, die an dem Meßstrang angeordnet sind, von dem Ende des Meßstranges aus ansteuern, so daß dieser nicht verschoben oder ausgetauscht werden muß. Das Erzielen unterschiedlicher Eindringtiefen kann auf einfachste Weise dadurch erfolgen, daß unterschiedlich weit auseinanderliegende Elektroden für die Messung herangezogen werden. Gleichzeitig lassen sich mit dem erfindungsgemäßen Meßstrang die unterschiedlichsten Elektrodenanordnungen verwirklichen, ohne daß die Elektroden selbst versetzt werden müßten.

Vorteilhafte Ausführungsformen der Erfindung sind durch die Unteransprüche gekennzeichnet.

So kann der Meßstrang vorteilhafterweise flexibel sein, was ein Aufrollen oder Aufwickeln des Meßstranges bedeutend erleichtert. Ferner können die Elektroden in beidseitig exponentiell wachsenden Abständen an dem Meßstrang angeordnet sein. Durch einen Meßstrang mit derartig beabstandeten Elektroden läßt sich einerseits eine sehr gute Auflösung im unmittelbar angrenzenden Bereich erzielen, andererseits aber auch eine sehr große Erkundungstiefe zwischen weit voneinander beabstandeten Elektroden erreichen.

Der erfindungsgemäße Meßstrang kann eine Länge > 100 m, vorzugsweise > 400 m aufweisen und kann durchaus auch die Länge von Kilometern annehmen. Ein derartig langer Meßstrang in der Größenordnung von 100 m oder mehr ermöglicht die geoelektrische Erfassung eines sehr großräumigen Gebietes, ohne daß jedoch Elektroden versetzt werden müßten.

Nach einer weiteren Ausbildung der Erfindung kann der Körper des Meßstranges durch die Anschlußleitungen gebildet sein, die von den Elektroden ringförmig und/oder kugelförmig umgeben sind. Eine solche Ausführungsform ist sehr kostengünstig und einfach herzustellen, da lediglich die ringförmigen und/oder kugelförmigen Elektroden in regelmäßigen Abständen an den Anschlußleitungen befestigt werden müssen, die durch die Elektroden hindurchgeführt werden. Bei der Verwendung des Meßstranges auf der Wasseroberfläche können zudem kugelförmige Elektroden als Schwimmer eingesetzt werden.

Nach einer weiteren Ausbildung der Erfindung können die Elektroden des Meßstranges ringförmig und in einen Kunststoffschlauch eingearbeitet sein, in dessen Innerem die Anschlußleitungen verlaufen. Eine solche Ausführungsform ist sehr robust und wenig störungsanfällig, da die Anschlußleitungen im Inneren des Kunststoffschlauches geschützt sind.

Insbesondere bei einem Meßstrang der obengenannten Länge bringt eine vorteilhafte Ausführungsform der Erfindung weitere Vorteile mit sich, bei der die Anschlußleitungen zwei Stromleitungen, zwei Spannungsleitungen und zwei Signalleitungen aufweisen. Hierdurch ist innerhalb des Meßstranges ein zweiadriger Strombus und ein zweiadriger Spannungsbus vorgesehen. Durch die beiden Signalleitungen lassen sich die jeweiligen Elektroden auf die einzelnen Busleitungen schalten, so daß eine beliebige Anzahl von Elektroden mit nur wenigen Anschlußleitungen angesteuert werden kann. Hierbei hat sich eine weitere Ausbildung der Erfindung als vorteilhaft erwiesen, bei der jede Elektrode des Meßstranges über eine am Meßstrang angeordnete Schalteinrichtung mit einer Stromleitung und einer Spannungsleitung des Meßstranges verbindbar ist.

Sofern jede erste Elektrode mit einer der beiden Stromleitungen und einer der beiden Spannungsleitungen verbindbar ist und jede zweite Elektrode mit der anderen der beiden Stromleitungen und der anderen der beiden Spannungsleitungen verbindbar ist, kann der schaltungstechnische Aufwand reduziert werden.

Die obengenannte Schalteinrichtung kann vorzugsweise über die Signalleitung aktivierbar und digital ansteuerbar sein. Bei dieser Ausführungsform wird jeder Schalteinrichtung eine digitale Adresse zugeordnet, so daß jede Schalteinrichtung über den Signalbus angesteuert werden kann. Bei einer erfolgten Ansteuerung schaltet die Schalteinrichtung die zugeordnete Elektrode auf die gewünschte Ader des Strombusses oder des Spannungsbusses.

Eine Abschirmung der Anschlußleitung ist insofern vorteilhaft, als die geoelektrischen Messungen dann nicht gestört werden.

Nach einer weiteren vorteilhaften Ausführungsform kann der Meßstrang an den Elektroden Adapter aufweisen, welche die Elektroden stabartig verlängern. Derartige Adapter sind insbesondere dann vorteilhaft, wenn die Elektroden in das Erdreich eingesteckt werden sollen oder wenn der Meßstrang auf einem Gewässer eingesetzt werden soll. Für die Verwendung im Erdreich können die Adapter spießartig ausgebildet sein und mit Hilfe einer Gelenkschelle an den Ringelektroden befestigt werden. Für den Einsatz in Wasser eignen sich besonders stabartige Adapter, die in Form einer Stange vertikal in das Gewässer reichen und ebenfalls mit einer Gelenkschellean den Elektroden befestigt werden können. Hierbei ist vorzugsweise auch ein Schwimmkörper an dem Meßstrang oder dem Adapter vorgesehen.

Nach einem weiteren Erfindungsgedanken betrifft die vorliegende Erfindung ein Meßsystem nach Anspruch 10, das eine Stromquelle, ein Spannungsmeßgerät und einen Elektrodenmeßstrang nach einem der Ansprüche 1 bis 9 aufweist. Erfindungsgemäß ist dabei ferner eine Anschlußvorrichtung vorgesehen, die an einem Ende des Meßstranges mit den Anschlußleitungen verbunden ist und die ein elektrisches Verbinden der Stromquelle und des Spannungsmeßgerätes mit vier beliebigen Elektroden des Meßstranges ermöglicht.

Ein derartiges Meßsystem ermöglicht in Verbindung mit dem erfindungsgemäßen Meßstrang völlig neue Möglichkeiten bei der geoelektrischen Widerstandskartierung. Wenn beispielsweise ein Meßstrang hinreichend großer Länge auf einer geologischen Formation ausgelegt wird, so kann mit Hilfe des erfindungsgemäßen Meßsystemes die gesamte Formation über ihre gesamte Länge kartiert werden, ohne daß Elektroden noch versetzt werden müßten. Hierbei läßt sich durch Wahl der jeweiligen Strom- und Potentialelektroden die gewünschte Eindringtiefe und das zu untersuchende Teilgebiet problemlos einstellen. Ebenso ist ein Versetzen der Elektroden möglich, ohne daß diese physikalisch versetzt werden müßten, indem lediglich andere Elektroden des Meßstranges verwendet werden.

Nach einer besonders vorteilhaften Ausführungsform kann jede Schalteinrichtung des Meßstranges über die beiden Signalleitungen mit der Anschlußvorrichtung des Meßsystemes verbunden sein und von der Anschlußvorrichtung selektiv ansteuerbar sein. Besonders vorteilhaft ist dabei die Ansteuerung über eine digitale Adresse, d.h. jeder Schalteinrichtung wird eine digitale Adresse zugeordnet, die von der Anschlußvorrichtung angesprochen werden kann. Bei Ansprechen einer solchen Adresse wird demnach die zugeordnete Elektrode auf eine gewünschte Signalleitung des Strombusses oder des Spannungsbusses geschaltet.

Das erfindungsgemäße Meßsystem und dessen Anschlußvorrichtung kann vorzugsweise von einem Computer ansteuerbar sein. Hierdurch erhält man ein vollautomatisches, geoelektrisches Kartierungssystem mit noch nicht dagewesenen Möglichkeiten, das innerhalb kürzester Zeit eine detaillierte Erfassung der geologischen Formation erlaubt und das gleichzeitig sehr kostengünstig arbeitet.

Nach einem weiteren Aspekt der Erfindung betrifft diese ein Verfahren zur Ermittlung des spezifischen Widerstandes von geologischen Formationen unter Verwendung eines Elektrodenmeßstranges nach einem der Ansprüche 1 bis 9. Hierzu wird zunächst ein Bohrloch gebohrt und der oben beschriebene Elektrodenmeßstrang wird in das Bohrloch eingesetzt. Im Anschluß daran wird ein Strom durch zwei Elektroden des Meßstranges geleitet und die entstehende Potentialdifferenz zwischen zwei anderen Elektroden wird gemessen. Im Anschluß daran kann die Potentialdifferenz zwischen zwei innerhalb des Bohrloches versetzten Elektroden gemessen werden, wobei die Elektroden durch Verwenden anderer Elektroden des Meßstranges versetzt werden.

Durch dieses neuartige Meßverfahren ist es unter Zuhilfenahme des erfindungsgemäßen Meßstranges erstmals möglich, detaillierte Informationen über eine geologische Formation zu erhalten, wobei die Eindringtiefe durch Verwendung unterschiedlicher Elektroden des Meßstranges frei gewählt werden kann. Es müssen also nicht - wie dies bislang im Stand der Technik der Fall war - jeweils unterschiedliche Sonden in das Bohrloch eingesetzt werden.

Indem das Versetzen der Elektroden innerhalb des Bohrloches dadurch erfolgt, daß andere Elektroden des gleichen Meßstranges verwendet werden, läßt sich der geologische Aufbau entlang des gesamten Bohrloches erfassen, ohne daß der Meßstrang mechanisch versetzt oder bewegt werden müßte. Gleichzeitig läßt sich die Eindringtiefe, die von dem Relativabstand der Elektroden abhängig ist, durch Wahl der entsprechenden Elektroden frei einstellen.

Eine ganz besonders vorteilhafte und bislang noch nicht vorgeschlagene Variante des erfindungsgemäßen Verfahrens besteht darin, daß das Bohrloch im wesentlichen horizontal gebohrt wird. Bei dieser Variante wird demnach kein vertikales oder überwiegend vertikales Bohrloch erstellt, sondern es wird eine im wesentlichen horizontale Bohrung ausgeführt. Hierbei muß natürlich zu Beginn und gegebenenfalls auch am Ende der Bohrung eine gewisse Vertikalkomponente vorhanden sein, um das Bohrgerät in die gewünschte Tiefe zu führen. Jedoch wird erfindungsgemäß unter einer im wesentlichen horizontalen Bohrung eine Bohrung verstanden, bei der mindestens 25% der Bohrlänge unter einem Winkel von < 45° zur Horizontalen verlaufen.

Durch diese vorteilhafte Ausführungsform des erfindungsgemäßen Verfahrens läßt sich erstmals eine geologische Formation größeren Ausmaßes "durchleuchten", ohne daß eine Vielzahl von vertikalen Testbohrungen angebracht werden müßte. Gleichzeitig ist es nicht erforderlich, den Elektrodenmeßstrang innerhalb des Bohrloches mehrfach mechanisch zu versetzen.

Nach einem weiteren Aspekt der vorliegenden Erfindung betrifft diese ein Verfahren zur Ermittlung des spezifischen Widerstandes von geologischen Formationen, bei dem einerseits Elektroden in ein im wesentlichen horizontales, erstes Bohrloch eingeführt werden, wobei zusätzlich weitere Elektroden an der Erdoberfläche angesetzt werden (Anspruch 14 ff.). Bei diesem Verfahren wird zunächst ein im wesentlichen horizontales, erstes Bohrloch gebohrt und es werden mindestens drei Potentialelektroden in das Bohrloch eingeführt. Als nächster Schritt wird ein Strom durch zwei Stromelektroden geleitet, die an der Oberfläche angesetzt und/oder in einem zweiten Bohrloch angeordnet sind, das in etwa parallel zum ersten Bohrloch verläuft. Durch Messen der Spannung zwischen zwei oder mindestens drei Potentialelektroden läßt sich der zwischen den an der Erdoberfläche oder im zweiten Bohrloch angesetzten Elektroden und den innerhalb des ersten Bohrloches befindlichen Elektroden befindliche Gesteinskomplex "durchstrahlen", so daß völlig neue Informationen in einer bislang noch nicht dagewesenen Informationsdichte erhalten werden können. Durch Wiederholen der Spannungsmessung zwischen zwei Potentialelektroden innerhalb des Bohrloches mit jeweils innerhalb des Bohrloches versetzten Elektroden läßt sich der zwischen Bohrloch und Erdoberfläche oder zweitem Bohrloch befindliche Gesteinskomplex vollständig kartieren, wobei beliebige Schnittebenen vorgenommen werden können, weshalb dieses Verfahren auch als geoelektrische Tomographie bezeichnet wird. Es lassen sich somit die beiden Stromelektroden in einem Bohrloch oder an der Oberfläche anordnen, aber auch eine der beiden Stromelektroden an der Oberfläche und die andere in einem Bohrloch anordnen.

Als besonders vorteilhaft erweist sich hierbei, wenn als Potentialelektroden ein Elektrodenmeßstrang der oben beschriebenen Art in das Bohrloch eingeführt wird. Insbesondere wenn das Bohrloch durchgängig ist, kann der Elektrodenmeßstrang nach Erstellen des Bohrloches an dem Bohrgestänge durch das Bohrloch gezogen werden, so daß ein Verlegen des Bohrstranges innerhalb kürzester Zeit möglich ist.

Auch wenn das Versetzen der Potentialelektroden innerhalb des Bohrloches durch mechanisches Versetzen des Meßstranges erreicht werden kann, besteht eine besonders vorteilhafte Verfahrensweise darin, zur Kartierung der Gesteinsformation lediglich andere Elektroden des Meßstranges als Potentialelektroden zu verwenden. Dies kann unter Verwendung des oben beschriebenen erfindungsgemäßen Meßsystemes auf einfachste Weise dadurch erfolgen, daß andere Elektroden aktiviert oder verschaltet werden, so daß der Meßtechniker von seinem Meßplatz aus, die gesamte geologische Formation entlang des Bohrloches und oberhalb des Bohrloches vermessen kann, ohne daß tatsächlich Elektroden mechanisch versetzt werden müßten. Durch Verwendung von computergesteuerten Meßprogrammen eröffnen sich durch das erfindungsgemäße Verfahren ungeahnte Möglichkeiten.

Eine weitere Ausführungsform des oben beschriebenen Verfahrens wird dadurch erzielt, daß nicht nur die innerhalb des Bohrloches befindlichen Elektroden variiert werden, sondern daß auch zumindest eine der Stromelektroden an der Erdoberfläche oder im zweiten Bohrloch versetzt wird. Hierdurch wird die Auflösung der erhaltenen Messungen bedeutend erhöht.

Sofern als Stromelektrode bei den oben beschriebenen Verfahren eine Elektrode eines Meßstranges nach einem der Ansprüche 1 bis 9 verwendet wird, ist das beschriebene Verfahren der geoelektrischen Tomographie noch weiterverbessert, da in diesem Fall das Versetzen der Stromelektroden an der Erdoberfläche oder im zweiten Bereich ebenfalls nicht mehr mechanisch erfolgen muß, sondern durch Wahl unterschiedlicher Elektroden des Meßstranges erfolgen kann. In diesem Fall empfiehlt sich die Verwendung der eingangs beschriebenen Adapter, die ein Einleiten der Meßströme in das Erdreich erleichtern.

Nachfolgend wird die vorliegende Erfindung rein beispielhaft anhand vorteilhafter Ausführungsformen unter Bezugnahme auf die beigefügten Zeichnungen beschrieben. Es zeigen:

Fig. 1    eine schematische Darstellung einer hügelartigen geologischen Formation, in die ein horizontales Bohrloch eingebracht ist, in dem sich ein erfindungsgemäßer Meßstrang befindet;

Fig. 2    eine schematische Darstellung der erfindungsgemäßen geoelektrischen Tomographie mit dem Meßstrang;

Fig. 3    eine schematische Darstellung eines Teils des erfindungsgemäßen Meßstranges, wobei die Schalteinrichtung schematisch dargestellt ist;

Fig. 4    die Stromlinien und Äquipotentiallinien, die bei der bekannten Widerstands-Tiefensondierung entstehen; und

Fig. 5    eine schematische Darstellung einer hügelartigen Formation mit einzelnen Meßpunkten der herkömmlichen Widerstands-Tiefensondierung; und

Fig. 6    einen Vertikalschnitt durch das Erdreich im Bereich einer geplanten Tunnelstrecke.

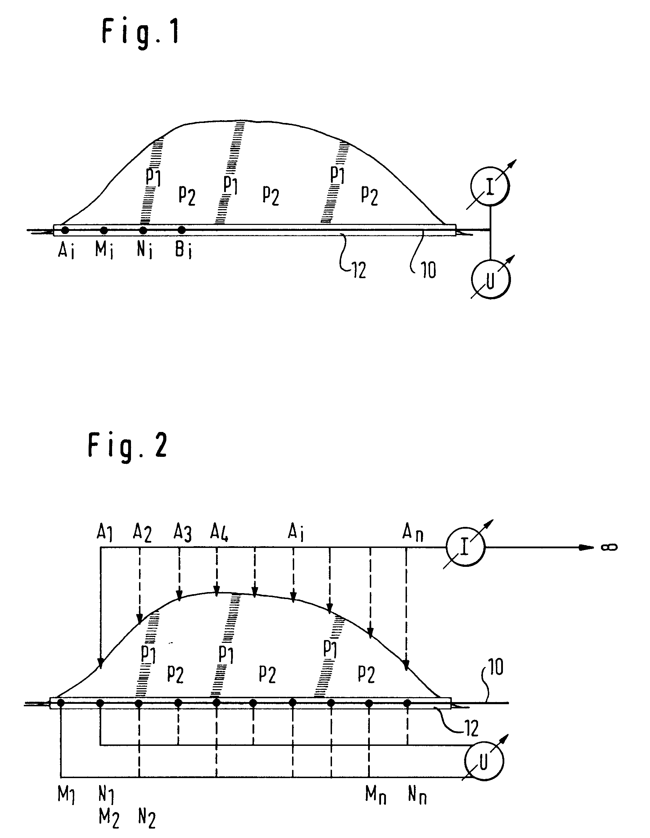

Fig. 1 zeigt eine hügelartige geologische Formation, wie sie auch in Fig. 5 dargestellt ist, wobei Bereiche mit geringerem spezifischen elektrischen Widerstand $\rho 1$ schraffiert dargestellt sind und Bereiche mit höherem spezifischen elektrischen Widerstand $\rho 2$ unschraffiert dargestellt sind.

Unter dem in Fig. 1 dargestellten hügelartigen Abschnitt ist ein horizontales Bohrloch 12 eingebracht, in dem sich ein Meßstrang 10 gemäß der Erfindung befindet. Ein solcher Meßstrang 10 kann nach Erstellen des Bohrloches 12 durch Ankoppeln an das Bohrgestänge ohne weiteres durch das Bohrloch gezogen werden.

Zur Durchführung der geoelektrischen Bohrlochkartierung werden zwei Elektroden des Meßstranges als Stromelektroden $A_i$, $B_i$ beschaltet und zwei weitere Elektroden werden als Potentialelektroden $M_i$, $N_i$ beschaltet. Durch Messen der entstehenden Potentialdifferenz lassen sich die geoelektrischen Daten erzielen. Insbesondere ist es durch Verwendung des erfindungsgemäßen Meßstranges möglich, die jeweils passende Elektrodenanordnung zu wählen, indem lediglich jeweils andere Elektroden zugeschaltet werden bzw. indem zwischen den Elektroden umgeschaltet wird. Hierbei können bekannte Anordnungen verwendet werden, wie z.B. die Wenner-Anordnung ($A_i$, $M_i$, $N_i$, $B_i$), die Dipol-Anordnung ($A_i$, $B_i$, $M_i$, $N_i$) oder die Carpenter-Anordnung ($A_i$, $M_i$, $B_i$, $N_i$). Für die Untersuchung in Gebieten mit homogener Schichtbildung und unterschiedlicher Neigung wird vorrangig die Wenner-Anordnung eingesetzt. Für die Kartierung von steilstehenden Inhomogenitäten, wie Verwerfungen und anderem, ist es jedoch günstiger, Messungen mit der Dipol-Anordnung durchzuführen. Der Abstand zwischen den einzelnen Elektroden bestimmt die Eindringtiefe, kann jedoch durch Zuhilfenahme des erfindungsgemäßen Meßstranges nahezu frei gewählt werden. Beispielsweise können die Elektroden einen Abstand von 2, 5, 10, 15 und 20 m aufweisen.

Als besonders vorteilhaft hat sich erwiesen, die Elektrodenpaare mit beidseits exponentiell wachsenden Abständen $d_n$ auf dem Meßstrang anzuordnen. Ordnet man innerhalb jeder Zehnerpotenz der Länge des Meßstranges neun Elektroden an, d.h. innerhalb von 1 bis 10 Metern und von 10 bis 100 Metern, so errechnet sich der Abstand $d_n$ nach der folgenden Gleichung

$$d_n = 10^{n/9},$$

wobei n die Nummer des Elektrodenpaares darstellt.

Die Eindringtiefe des geoelektrischen Meßverfahrens beträgt im ungünstigsten Fall ein Sechstel des Abstands der verwendeten Elektroden; daher ist es sinnvoll, die Elektrodenpaare mit wachsenden Abständen auf dem Meßstrang anzuordnen, da sich mit sehr weit voneinander entfernten Elektroden ohnehin keine sehr genaue, d.h. hoch auflösende Messung erzielen läßt. Aufgrund des engen Abstandes nahe der Mitte des Meßstranges kann die nähere Umgebung genauer erkundet werden, was der Untersuchung häufig auftretender geologischer Schichtungen mit an der Oberfläche angeordneten, weniger mächtigen Schichten entgegenkommt. Dies gilt insbesondere für Messungen von der Wasseroberfläche aus, weil die Mächtigkeit junger Sedimente in der Regel geringer als die alter Sedimente ist.

Fig. 2 erläutert die erfindungsgemäße geoelektrische Tomographie anhand einer ähnlichen hügelartigen geologischen Formation, wie sie in den Fig. 1 und 5 dargestellt ist. Wie die Figur zeigt, ist wiederum ein Meßstrang 10 gemäß der Erfindung in ein im wesentlichen horizontales Bohrloch 12 eingebracht, wobei an dem Meßstrang eine Vielzahl von Elektroden in gleichmäßigen Abständen angeordnet ist. Entgegen der Darstellung in Fig. 2 sind die Anschlußleitungen der einzelnen Elektroden des Meßstranges zu einem Ende des Meßstranges geführt. Die Elektroden $M_1$, $N_1$, $M_2$, $N_2$ bzw. $M_n$, $N_n$ werden so gewählt, daß der zu untersuchende Gesteinskomplex komplett "durchstrahlt", d.h. durchströmt, werden kann. Um eine "Schattenbildung" eines niederohmigen Störkörpers $\rho 1$ erfassen zu können, wird eine Stromelektrode $A_1$ an einer Stelle der Erdoberfläche fixiert und die andere Stromlelektrode wird in weiter Entfernung von der Meßstelle im Erdboden angebracht. Zur Messung werden zunächst die Potentialelektroden entlang der Strecke des Bohrloches bewegt, was durch mechanische Bewegung des Bohrstranges erfolgen kann. Einfacher ist jedoch die Verwendung von unterschiedlichen Elektroden des Meßstranges. Wenn sich eine "Schattenbildung" $\rho 1$ abzeichnet, so muß zur Abgrenzung der Umrisse des Störkörpers die Messung von mehreren Stromelektrodenpositionen aus wiederholt werden. Im Anschluß kann die Stromelektrode $A_1$ an eine Stelle $A_2$ versetzt werden oder, wenn für die Stromelektroden ebenfalls ein erfindungsgemäßer Meßstrang eingesetzt wird, wird die danebenliegende Stromelektrode $A_2$ aktiviert und die Messung wird wiederholt.

Es können auch Stromelektroden und Spannungselektroden vertauscht sein, d.h. die Elektroden innerhalb des Bohrloches werden als Stromelektroden eingesetzt, wohingegen die an der Erdoberfläche befindlichen Elektroden als Potentialelektroden herangezogen werden.

Die oben beschriebene geoelektrische Tomographie eignet sich hervorragend zur Lokalisierung von Auflockerungszonen und tektonischen Störungen, zur Ortung von Wasserwegigkeiten und Wassereinschlüssen und es kann zwischen parallel verlaufenden Bohrlöchern eine Inventur von vorhandenen Strecken auf nieder- oder hochohmige Bereiche untersucht werden.

Zwar sind in den Fig. 1 und 2 lediglich Strommeßgeräte und Spannungsmeßgeräte dargestellt, jedoch wird selbstverständlich zur Erzeugung des Meßstromes eine Stromquelle zwischen zwei gewünschten Stromelektroden geschaltet und die Spannung wird zwischen den zwei gewünschten Potentialelektroden gemessen.

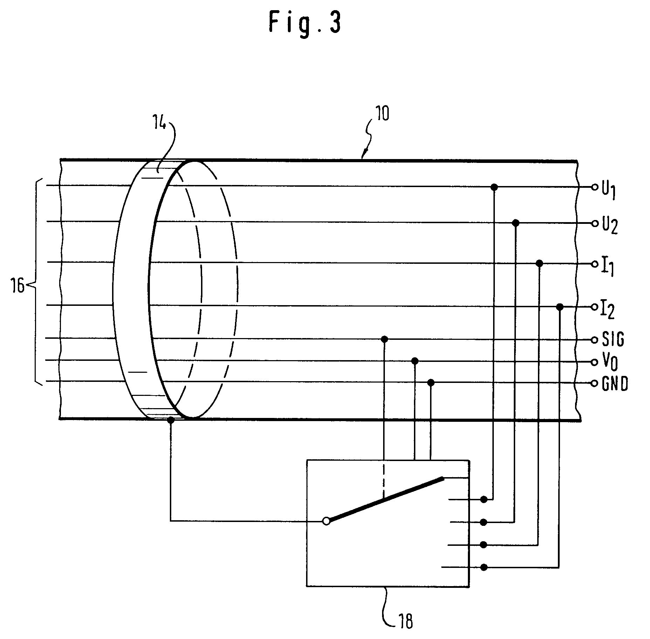

Fig. 3 zeigt schematisch einen Teil eines erfindungsgemäßen Meßstranges 10. Der Elektrodenmeßstrang weist eine Vielzahl von ringförmigen Elektroden 14 auf, die an dem Meßstrang unter einem jeweils gleichen Abstand von 100 cm angeordnet sind. Die ringförmigen Elektroden 14 sind in einen Kunststoffschlauch so eingearbeitet, daß der ringförmige Außenumfang der metallenen Elektroden 14 frei bleibt. Die Anschlußleitungen 16 für die jeweiligen Elektroden 14 verlaufen innerhalb des Kunststoffschlauches und sind abgeschirmt. Insgesamt ist der Meßstrang flexibel und läßt sich problemlos auf eine Kabeltrommel aufwickeln. Der in Fig. 3 teilweise schematisch dargestellte Meßstrang 10 ist 400 m lang, es können jedoch auch wesentlich längere Längen vorgesehen werden.

Wie Fig. 3 zeigt, verlaufen innerhalb des Meßstranges zwei Spannungsleitungen $U_1$ und $U_2$, die einen Spannungsbus bilden, zwei Stromleitungen $I_1$ und $I_2$, die einen Strombus bilden, sowie eine Signalleitung SIG und GND. Ferner ist zur Spannungsversorgung eine Leitung $V_0$ vorgesehen.

Der in Fig. 3 dargestellte Meßstrang weist in seinem Inneren eine Schalteinrichtung 18 auf, die in Fig. 3 lediglich schematisch angedeutet ist. Die Schalteinrichtung 18 enthält einen Umschalter, der die Elektrode 14 wahlweise mit den Anschlußleitungen des Strombusses und des Spannungsbusses verbindet. Bei Aktivierung der Schalteinrichtung 18 über eine am Ende des Meßstranges 10 angeordnete Anschlußvorrichtung (nicht dargestellt), kann die Elektrode 14 auf jede Anschlußleitung $U_1$, $U_2$, $I_1$ oder $I_2$ geschaltet werden. Die Schalteinrichtung 18 ist an die Versorgungsspannung $V_0$ angeschlossen und wird über die Signalleitung SIG aktiviert. Das Ansprechen der Schalteinrichtung 18 erfolgt über eine digitale Adresse, wobei über einen vorgesehenen Digitalcode eingestellt werden kann, auf welchen Bus die zugeordnete Elektrode 14 geschaltet werden soll. Selbstverständlich ist jeder Elektrode 14 eine Schalteinrichtung 18 zugeordnet. Die Schalteinrichtung 18 besteht aus einem kleinen elektronischen Schaltkreis und ist innerhalb des Meßstranges aufgenommen.

Zur erhöhten Sicherheit kann die Schalteinrichtung 18 an jeder Elektrode auch doppelt vorgesehen sein. Da die Kosten einer derartigen Schalteinrichtung gering sind, ist eine solche Ausführungsform besonders vorteilhaft, da bei Ausfall einer Schalteinrichtung der Meßstrang nicht funktionslos ist, sondern die jeweilige Elektrode durch die zweite vorgesehene Schalteinrichtung, die eine andere Adresse aufweist, angesprochen werden kann.

Das nicht dargestellte Meßsystem gemäß der Erfindung weist eine Stromquelle sowie ein Spannungsmeßgerät auf, die in einem Computer integriert sind. Eine Anschlußvorrichtung ist an einem Ende des Meßstranges mit dessen Anschlußleitungen verbunden, so daß die Stromquelle und das Spannungsmeßgerät mit mindestens vier beliebigen Elektroden des Meßstranges verschaltbar sind. Der Zugriff auf die jeweiligen gewünschten Elektroden kann programmgesteuert erfolgen, wobei beliebige Meßprogramme, d.h. Elektrodenabstände gewählt werden können.

Zur Durchführung der geoelektrischen Tomographie kann die Anschlußvorrichtung mit den Anschlußleitungen eines zweiten Meßstranges verbunden werden, der an der Erdoberfläche liegt, wobei die Elektroden mit Hilfe der vorgesehenen Adapter in das Erdreich eingesteckt sind. Durch eine derartige Anordnung läßt sich die gesamte hügelartige Formation komplett durchmessen, wobei aufgrund der großen Variationsmöglichkeiten geologische Profile mit einer bislang noch nicht dagewesenen Informationsdichte aufgenommen werden können. Hierbei können beliebige Schnitte durch die hügelartige Formation vorgenommen werden.

Der erfindungsgemäße Elektrodenmeßstrang eignet sich neben einer Anordnung in einem insbesondere horizontalen Bohrloch oder auf der Erdoberfläche auch hervorragend für eine Erfassung von geologischen Schichten unterhalb einer Gewässeroberfläche. Hierbei ist eine Erfassung von geologischen Schichten mit einer Genauigkeit bezüglich der Schichtmächtigkeit im Dezimeterbereich möglich, was für nachfolgende Bohrarbeiten entscheidend sein kann. Für die Messung an der Gewässeroberfläche und eine beispielsweise bis 10 m unter der Sohle des Gewässers gewählte Informationstiefe können beispielsweise zwei mittige Potentialelektroden mit einem Abstand von 1 m innerhalb des Meßstranges gewählt werden, wobei die Elektroden rechts und links von diesen Potentialelektroden als Stromelektroden herangezogen werden und beispielsweise einen Abstand von 3, 4, 6, 9, 12, 15, 18, 21, 24, 27, 30, 36, 42 und 50 m aufweisen oder ebenfalls mit exponentiell wachsenden Abständen angeordnet sein.

Der erfindungsgemäße Meßstrang läßt sich zu Messungen an der Gewässeroberfläche auf einfachste Weise mit Schwimmkörpern versehen oder er kann zwischen zwei Wasserfahrzeugen gezogen werden. Bislang wurden Unterdükerungen von Flüssen lediglich durch zwei am Ufer niedergebrachte Bohrungen untersucht. Hierbei besteht jedoch bei punktuellen geologischen Informationen die Gefahr, daß sich insbesondere bei breiten Flüssen die geologische Situation im Trassenverlauf so stark verändert, daß eine horizontale Bohrung trotz guter Untersuchungsergebnisse aus dem Uferbereich scheitern könnte. Um diese Informationslücke zu schließen, wurden in der Vergangenheit allenfalls seismische Untersuchungen durchgeführt, die durch ihren hohen Aufwand und ihr geringes Auflösevermögen ein ungünstiges Kosten-Nutzen-Verhältnis bieten. Erfindungsgemäß wird jedoch diese Erkundungslücke, d.h. der Abstand zwischen den beiden Vertikalbohrungen, geschlossen, indem in einem Abstand von 1 bis 2 m jeweils eine zusätzliche Information über die geologische Situation ermöglicht wird. Durch Verwendung von zwei erfindungsgemäßen Elektrodenmeßsträngen in einem Abstand von beispielsweise 2 m wird eine ausgezeichnete Auflösung erzielt, wobei eine Messung maximal 5 min dauert, sobald die Position der Meßeinrichtung auf dem Meßpunkt erreicht ist. Hierbei kann zur Bestimmung der Flußsohle zusätzlich ein Echolot eingesetzt werden und die Positionierung des Meßstranges kann über eine geodätische Aufnahme erfolgen.

Für Messungen auf dem Wasser bestehen verschiedene alternative Möglichkeiten. Zum einen kann eine Apparatur verwendet werden, die aus einem im wesentlichen leiterförmig ausgebildeten Gestell mit daran befestigten Schwimmern an beiden Längsholmen des leiterförmigen Aufbaus besteht. Eine weitere Möglichkeit besteht darin, einzelne Rohrelemente starr miteinander zu verbinden und ringförmige Elektroden um die Rohre anzuordnen, wobei auch ringförmige Elektroden gestaltet werden können, die bereits in die Rohrverbindungstücke integriert sind. Ebenso ist es denkbar, kugelförmige Elektroden einzusetzen, die selbst als Schwimmer dienen. Im leiterförmigen Gestell, an dessen beiden Längsholmen jeweils der Meßstrang befestigt ist, befindet sich ein Meßboot mit der Schalt- und Registriereinheit für die Meßelektroden.

Schließlich besteht noch die Möglichkeit, entweder das leiterförmige Gestell samt Meßboot mit Hilfe von Motorbooten über das Meßprofil zu bewegen oder aber auch den Elektrodenmeßstrang selbst zwischen zwei Booten aufzuspannen. Im letzteren Fall entfällt das leiterförmig ausgebildete Gestell mit den daran befestigten Schwimmern.

Ein Einsatz des erfindungsgemäßen Meßstranges in einem Bohrloch erhöht im Gegensatz zu den klassischen Bohrlochsonden die Investigationstiefe erheblich. Diese kann in Abhängigkeit von der Bohrlochlänge und der Länge des Elektrodenmeßstranges die bisherigen Eindringtiefen bei weitem übersteigen. Gleichzeitig kann der erfindungsgemäße Elektrodenmeßstrang auch für die oben beschriebene geoelektrische Tomographie als Sender und auch als Empfänger eingesetzt werden. Hierdurch ist der komplette Gebirgskörper mit einer noch nicht dagewesenen Auflösung und Informationsdichte zu erfassen.

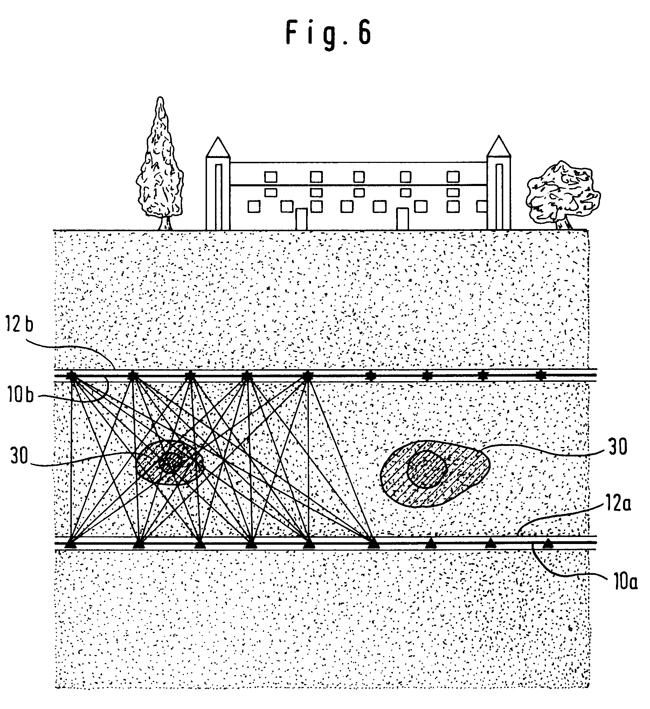

Fig. 6 zeigt einen Vertikalschnitt durch das Erdreich im Bereich einer geplanten Tunnelstrecke. Hier ist es von besonderer Wichtigkeit, eine hohe Informationsdichte insbesondere im Bereich der geplanten Tunneltrasse zu gewinnen. Aus diesem Grund wurden im dargestellten Beispiel in Fig. 6 zwei in etwa horizontal verlaufende Bohrungen 12a und 12b aufgefahren, in die jeweils ein Meßstrang 10a bzw. 10b eingeführt wurde. In gleicher Weise können selbstverständlich auch vier oder noch mehr Meßstränge in entsprechende parallel zueinander verlaufende Bohrungen eingeführt werden, wobei die Messungen jeweils zwischen zwei Meßsträngen durchgeführt werden. Wenn im vorliegenden Fall jeweils unterschiedliche Elektroden des Meßstranges 10b als Stromelektroden geschaltet werden und zwei Elektroden im Meßstrang 10a als Potentialelektroden geschaltet werden, so lassen sich zwischen den beiden Meßsträngen, wie in Fig. 6 dargestellt ist, eine Vielzahl von Schnitten anfertigen und ein sehr präzises, tomographisches Bild im gewünschten Bereich gewinnen.

Sind entlang einer geplanten Tunneltrasse beispielsweise vier parallel zueinander verlaufende Horizontalbohrungen eingebracht, so können diese präzisen Schichtdarstellungen zwischen jeweils zwei Meßsträngen angefertigt werden und somit insgesamt sechs verschiedene Schnitte im Bereich der geplanten Trassenführung gewonnen werden (vier Seiten und zwei Diagonalen zwischen den vier parallel verlaufenden Probebohrungen).

Befinden sich im Bereich des geplanten Trassenverlaufs Bereiche 30 mit besonderen geologischen Eigenschaften, so können diese zum einen erkannt werden und zum anderen ihre Abmessungen mit hoher Genauigkeit bestimmt werden. Aufgrund der Tatsache, daß die Elektroden in den jeweiligen Meßsträngen jeweils sowohl mit einer Strom-, wie mit einer Spannungsleitung verbindbar sind, lassen sich diese Messungen mit hoher Präzision durchführen und insbesondere auch entlang des geplanten Trassenverlaufs durchführen, ohne nach jeder Messung jeweils den Meßstrang versetzen zu müssen.

Geplante Tunnelstrecken oder auch andere Bauwerke liegen häufig sehr weit unter der Erdoberfläche oder Gewässeroberfläche, so daß Messungen von der Erd-, oder Gewässeroberfläche aus nur noch mit einer geringeren Auflösung durchgeführt werden können. Durch das vorgeschlagene Verfahren einer Messung zwischen zwei in etwa parallel angeordneten Meßsträngen, die in zwei Horizontalbohrungen eingebracht wurden, lassen sich auch in großer Tiefe Erkundungen mit sehr hoher Informationsdichte erzielen. Da die Struktur des Untergrunds vorher nicht bekannt ist, besitzt der erfindungsgemäße Meßstrang auch hier den Vorteil, daß sich die Abstände zwischen den Elektroden variieren lassen, wodurch eine sehr hohe Auflösung erzielt werden kann.

**Patentansprüche**

1. Elektrodenmeßstrang für geoelektrische Messungen, mit

   - mindestens sechs Elektroden (14), die an dem Meßstrang (10) angeordnet sind; und
   - mehreren elektrischen Anschlußleitungen (16), die von mindestens einem Ende des Meßstranges (10) zu den Elektroden (14) führen,

   dadurch **gekennzeichnet**, daß

   - jede Elektrode (14) des Meßstranges (10) über eine am Meßstrang angeordnete Schalteinrichtung (18) schaltbar ist; und
   - jede Elektrode (14) des Meßstranges (10) mit einer Stromleitung ($I_1$, $I_2$) und einer Spannungsleitung ($U_1$, $U_2$) verbindbar ist.

2. Vorrichtung nach Anspruch 1, dadurch gekennzeichnet, daß

   - der Meßstrang (10) flexibel ist; und
   - eine Länge größer 100 m, vorzugsweise größer 400 m aufweist.

3. Vorrichtung nach Anspruch 1 oder 2, dadurch gekennzeichnet, daß die Elektroden (14) in beidseitig exponentiell wachsenden Abständen an dem Meßstrang angeordnet sind.

4. Vorrichtung nach mindestens einem der vorstehenden Ansprüche, dadurch gekennzeichnet, daß der Körper des Meßstranges durch die Anschlußleitungen gebildet ist, die von den Elektroden ringförmig und/oder kugelförmig umgeben sind.

5. Vorrichtung nach mindestens einem der Ansprüche 1 bis 3, dadurch gekennzeichnet, daß die Elektroden (14) ringförmig und in einen Kunststoffschlauch eingearbeitet sind, in dessen Innerem die Anschlußleitungen (16) verlaufen.

6. Vorrichtung nach mindestens einem der vorstehenden Ansprüche, dadurch gekennzeichnet, daß

   - die Anschlußleitungen (16) zwei Stromleitungen ($I_1$, $I_2$), zwei Spannungsleitungen ($U_1$, $U_2$) und zwei Signalleitungen (SIG, GND) aufweisen; und
   - die Anschlußleitungen (16) elektrisch abgeschirmt sind.

7. Vorrichtung nach Anspruch 6, dadurch gekennzeichnet, daß jede erste Elektrode mit einer der beiden Stromleitungen und einer der beiden Spannungsleitungen verbindbar ist, und daß jede zweite Elektrode mit der anderen der beiden Stromleitungen und der anderen der beiden Spannungsleitungen verbindbar ist.

8. Vorrichtung nach Anspruch 7, dadurch gekennzeichnet, daß die Schalteinrichtung (18) über die Signalleitung (SIG) aktivierbar ist und vorzugsweise digital ansteuerbar ist.

9. Vorrichtung nach einem der vorstehenden Ansprüche, dadurch gekennzeichnet, daß der Meßstrang (10) an den Elektroden Adapter aufweist, welche die Elektroden stabartig verlängern.

10. Meßsystem, mit
    einer Stromquelle,
    einem Spannungsmeßgerät,
    einem Elektrodenmeßstrang (10) nach einem der vorstehenden Ansprüche, und
    einer Anschlußvorrichtung, die an einem Ende des Meßstranges (10) mit den Anschlußleitungen (16) verbunden ist und die ein elektrisches Verbinden der Stromquelle und des Spannungsmeßgerätes mit vier beliebigen Elektroden (14) des Meßstranges (10) ermöglicht.

11. Meßsystem nach Anspruch 10,
dadurch gekennzeichnet, daß
jede Schalteinrichtung (18) über die Signalleitungen (SIG, GND) mit der Anschlußvorrichtung verbunden und von dieser selektiv, vorzugsweise über eine digitale Adresse, ansteuerbar ist.

12. Verfahren zur Ermittlung des spezifischen Widerstandes von geologischen Formationen, umfassend die folgenden Schritte:

a) Bohren eines Bohrloches;
b) Einführen eines Elektrodenmeßstranges nach einem der Ansprüche 1 bis 9 in das Bohrloch;
c) Durchleiten eines Stromes durch zwei Elektroden;
d) Messen der Spannung zwischen zwei anderen Elektroden; und
e) Wiederholen der Schritte c) und d) mit jeweils innerhalb des Bohrloches versetzten Elektroden, wobei die Elektroden durch Verwenden anderer Elektroden des Meßstranges versetzt werden.

13. Verfahren nach einem der vorstehenden Ansprüche 15 und 12,
dadurch gekennzeichnet, daß
das Bohrloch im wesentlichen horizontal gebohrt wird.

14. Verfahren zur Ermittlung des spezifischen Widerstandes von geologischen Formationen, umfassend die folgenden Schritte:

A) Bohren eines im wesentlichen horizontalen, ersten Bohrloches;
B) Einführen von mindestens drei Potentialelektroden in das erste Bohrloch;
C) Durchleiten eines Stromes durch zwei Stromelektroden, die jeweils an der Erdoberfläche oder in einem zweiten Bohrloch angeordnet sind, das in etwa parallel zum ersten Bohrloch verläuft.
D) Messen der Spannung zwischen zwei der mindestens drei Potentialelektroden; und
E) Wiederholen der Schritte C) und D) mit jeweils innerhalb des Bohrloches versetzten Elektroden.

15. Verfahren nach Anspruch 14,
dadurch gekennzeichnet, daß
im Verfahrensschritt B) ein Elektrodenmeßstrang nach einem der Ansprüche 1 bis 9 in das erste Bohrloch eingeführt wird.

16. Verfahren nach Anspruch 15,
dadurch gekennzeichnet, daß
die Elektroden im Verfahrensschritt E) durch Versetzen des Meßstranges versetzt werden.

17. Verfahren nach Anspruch 15,
dadurch gekennzeichnet, daß
die Elektroden im Verfahrensschritt E) durch Verwenden anderer Elektroden des Meßstranges versetzt werden.

18. Verfahren nach einem der vorstehenden Ansprüche 14 bis 17,
dadurch gekennzeichnet, daß
im Anschluß an den Verfahrensschritt E) als weiterer Verfahrensschritt F) der Verfahrensschritt E) wiederholt wird, nachdem zumindest eine der Stromelektroden an der Erdoberfläche versetzt worden ist.

19. Verfahren nach einem der vorstehenden Ansprüche 14 bis 18,
dadurch gekennzeichnet, daß
als zumindest eine der Stromelektroden eine Elektrode eines Meßstranges nach einem der Ansprüche 1 bis 9 verwendet wird.

Fig.1

Fig.2

# Fig.3

# Fig.4

ERDOBERFLÄCHE

AQUIPOTENTIAL-
LINIEN

STROMLINIEN

TIEFE

# Fig.5

WTS-1  WTS-2  WTS-3  WTS-i  WTS-n

P1  P2  P1  P2  P1  P2

# Fig. 6

12 b

10 b

30

30

12 a

10 a